(19)

**Europäisches Patentamt**
**European Patent Office**
**Office européen des brevets**

(11)  **EP 4 220 996 A1**

(12) **EUROPEAN PATENT APPLICATION**

(43) Date of publication:
02.08.2023  Bulletin 2023/31

(21) Application number: 22154627.8

(22) Date of filing: 01.02.2022

(51) International Patent Classification (IPC):
**H04B 17/391** (2015.01)     **H04B 17/309** (2015.01)
**H04L 25/02** (2006.01)       **H04W 84/18** (2009.01)

(52) Cooperative Patent Classification (CPC):
**H04B 17/391; H04B 17/309; H04L 25/0202;**
H04L 25/0212

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Nami Ai Pte Ltd**
**039190 Centennial Tower 17.05 (SG)**

(72) Inventors:
• **VODOVOZOV, Gleb**
  **Marina (SG)**
• **SCHUKIN, Pavel**
  **Lyubertsy (RU)**

(74) Representative: **Driver, Virginia Rozanne et al**
**Page White & Farrer Limited**
**Bedford House**
**21A John Street**
**London WC1N 2BF (GB)**

(54)  **WIFI SENSING DEVICE**

(57)    A sensing system for monitoring a place is provided. The sensing system comprises a sensing device for monitoring a place and one or more processors. The sensing device comprises a transmitter component configured to transmit WiFi signals and a receiver component configured to detect backscattered WiFi signals, the backscattered WiFi signals having been reflected by a surface in the place after transmission from the transmitter component. The one or more processors are configured to extract signal characteristics from the detected WiFi signals, process the extracted signal characteristics, and compare the extracted signal characteristic to extracted signal characteristics of a historic backscattered WiFi signal received at the receiver component to monitor the place.

EP 4 220 996 A1

## Description

Technical Field

The present invention relates to a sensing device for sensing a place using WiFi signals, and a method of using the sensing device to monitor the place.

Background

Wi-Fi, one of the most commonly used wireless network protocols, is typically associated with wireless internet access and local area networking of devices. The growth in number of Wi-Fi enabled networks around the world to comprise of tens of billions of connected devices has opened up a new range of possibilities for application of Wi-Fi technology other than providing wireless internet access and communication. One promising and tangible application of Wi-Fi signals is that of using it for motion sensing.

Wi-Fi Sensing has been developed over recent years as an alternative way to monitor places. It has various advantages over other sensing solutions. In some forms, it does not need any extra hardware but can rely on existing WiFi routers and WiFi enabled devices in a place. For example, active radar systems require dedicated antennas and transceivers that are complex and costly, while Wi-Fi sensing uses existing devices like cell phones, PCs, and mesh Wi-Fi systems. A user need only to install the required software to transform their setup into a Wi-Fi sensing solution.

Wireless signals, for example WiFi signals, can be used to sense an entity by monitoring changes in signal characteristics. The use of wireless signals in presence detection has the advantage that no cameras need to be used, and therefore the privacy of those being sensed is maintained.

Wi-Fi signals penetrate through walls, enabling out of line-of-sight (LOS) operation, an important consideration for security monitoring applications.

Wi-Fi sensing is innately cost-effective due the near-ubiquitous nature of Wi-Fi. Wi-Fi is widespread, so the infrastructure is already in place. There is no need to build a new ecosystem because the IoT (Internet of Things) provides the perfect ecosystem for a sensing system.

Wi-Fi sensing has been found to be surprisingly accurate. Channel State Information (CSI) is collected from the packets and signals used for transmitting and receiving information from regular devices connected via a Wi-Fi network. This technology does not require any additional specialized signals, nor does it degrade network performance or the user experience when using Wi-Fi.

Wireless channel estimation with help of Wi-Fi signals and off-the-shelf devices is widely used for context recognition such as: activity recognition, fall detection, vital sensing, localization and tracking, gesture recognition, material/moisture sensing and so on.

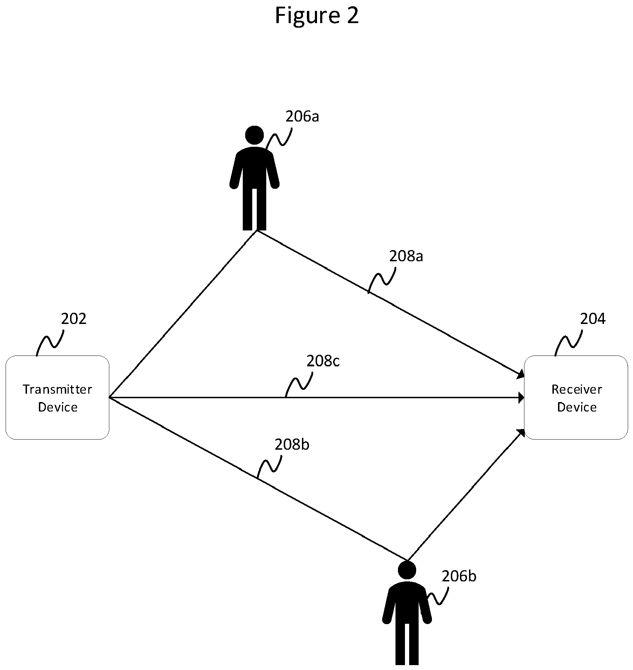

An example system used in for context recognition is shown in Figure 2. The system comprises a WiFi transmitter device 202 and a WiFi receiver device 204 which are specially separated. The WiFi transmitter device 202 transmits WiFi signals 208a, 208b, 208c. The signals 208a, 208b, 208c are received at the receiver device 204 and their CSI analysed by a processing system. The CSI data gathered from the received signals 208a, 208b, 208c can be used to determine the presence and/or motion of an entity 206a, 206b.

For example, signal 208c is received at the receiver device 204 having not interacted with any entities. The CSI data extracted from the received signal 208c is therefore the same or substantially similar to characteristic CSI for said signal 208c, where characteristic CSI values are values of CSI data corresponding signals received when the place is unoccupied.

The CSI data extracted from signals 208a and 208b, however, differ from their corresponding characteristic CSI. This is because signal 208a has been reflected off of entity 206a and signal 208b has been reflected off of entity 206b before being received at the receiver device 204.

The system shown in Figure 2 can therefore be used to detect the presence and/or movement of entities 206a, 206b within an area between the transmitter device 202 and the receiver device 204.

Summary

The effectiveness of known WiFi sensing systems as shown in Figure 2 is limited by the placement of the transmitter and receiver devices. For example, the locations and number of transmitters and receivers may be dependent on available power sources. Additionally, in order to detect entities in the place, the entities must disrupt a signal passing between the transmitter and receiver, such that there needs to be a certain minimum distance between the transmitter and receiver. Therefore, the coverage of the sensing system is limited by the placement of the transmitter and receiver devices.

The area of the place which can be monitored, and thus the effectiveness of the sensing system, is therefore limited by the physical constraints of the place itself.

In order to overcome these limitations, the present inventors have devised a WiFi sensing device which houses both a transmitter and a receiver component, with the receiver component detecting signals transmitted from the transmitter component. By collocating the transmitter and corresponding receiver components and configuring the receiving component to detect backscattered WiFi signals originating from the transmitter component, the WiFi sensing device can monitor movement in the area surrounding the device, and requires only a single power source, therefore improving the range of coverage which is possible and removing the constraints imposed by the place.

According to a first aspect of the present invention, there is provided a sensing system for monitoring a place, the sensing system comprising: a sensing device for monitoring a place, the sensing device comprising: a transmitter component configured to transmit WiFi signals; a receiver component configured to detect backscattered WiFi signals, the backscattered WiFi signals having been reflected by a surface in the place after transmission from the transmitter component; and one or more processors configured to extract signal characteristics from the detected WiFi signals; process the extracted signal characteristics; and compare the extracted signal characteristic to extracted signal characteristics of a historic backscattered WiFi signal received at the receiver component to monitor the place.

In some embodiments, the transmitter component may comprise one or more transmitter antennas and one or more transmitter processors configured to generate the WiFi signals for transmission by the one or more transmitter antennas.

In some embodiments, the receiver component may comprise one or more receiver antennas and one or more receiver processors, wherein the one or more receiver processors are configured to extract the signal characteristics from the detected WiFi signals and process the extracted signal characteristics.

In some embodiments, the one or more receiver processors may be configured to compare the extracted signal characteristic to the extracted signal characteristics of the historic backscattered WiFi signal received at the receiver component.

In some embodiments, the receiver component may comprise one or more receiver antennas and one or more receiver processors, wherein the one or more receiver processors may be configured to extract the signal characteristics from the detected WiFi signals and process the extracted signal characteristics, wherein the one or more transmitter processors and the one or more receiver processors are not in direct communication.

In some embodiments, the transmitter component may be configured to transmit WiFi signals over a channel different to a WiFi communication channel.

In some embodiments, the receiver component may detect WiFi signals comprising a dominant signal transmitted directly from the transmitter component to the receiver component.

In some embodiments, the sensing device may further comprise one or more hardware decouplers for attenuating the dominant signal while maintaining sensitivity to the backscattered signal.

In some embodiments, the transmitter component and the receiver component may be arranged in a trasnmitting plane, wherein a direction of peak gain of the transmitter component is not coplanar with the transmitting plane.

In some embodiments, the direction of peak gain may be substantially perpendicular to the transmitting plane.

In some embodiments, the transmitter component may transmit WiFi signals radially in substantially all directions, wherein the receiver component may be arranged in the transmission plane such that the transmitted WiFi signal transmitted in the direction of the receiver component has a relatively low power when compared to the power of the WiFi signal transmitted in the direction of peak gain.

In some embodiments, the transmitter component and the receiver component may be housed in the same housing.

In some embodiments, the housing may be mountable in the place orientated to detect backscattered WiFi signals, the backscattered WiFi signals for detecting movement of a living entity in the place.

In some embodiments, the sensing system may further comprise one or more transmitter devices, wherein the receiver component may be further configured to detect reflected WiFi signals, the reflected WiFi signals having been reflected by a surface in the place after transmission from the one or more transmitter devices.

In some embodiments, the one or more processors may be further configured to extract signal characteristics from the detected reflected WiFi signals, process the extracted signal characteristics of the reflected WiFi signals, and compare the extracted signal characteristic of the reflected WiFi signals to extracted signal characteristics of a historic reflected WiFi signal received at the receiver component to monitor the place.

In some embodiments, the system may further comprise a memory, accessible by the at least one processor, storing a monitoring condition, wherein the one or more processors are further configured to determine if the monitoring condition is satisfied.

In some embodiments, the one or more processors may be configured to determine a difference between the extracted signal characteristic to extracted signal characteristics of the historic backscattered WiFi signal, wherein the monitoring condition defines a required difference.

According to a second aspect of the present invention, there is provided a computer-implemented method for monitoring a place, the method comprising: transmitting, from a transmitting component of a sensing device, a WiFi signal; detecting, at a receiving component of the sensing device, backscattered WiFi signals, the backscattered WiFi signals having been reflected by a surface in the place after transmission from the transmitting component; extracting, from the detected backscattered WiFi signals, signal characteristics; and processing the extracted signal characteristics and comparing the extracted signal characteristic to extracted signal characteristics of a historic backscattered WiFi signal received at the receiver component to determine if a monitoring condition is satisfied.

In some embodiments, the signals characteristics may be channel state information.

In some embodiments, the method may further comprise calculating a highest power component of Channel Impulse Response of the detected backscattered WiFi signal, wherein the step of processing the extracted signal characteristics may comprise processing the extracted signal characteristics of the detected signal corresponding to the highest power component of Channel Impulse Response of the detected backscattered signal.

In some embodiments, the method may further comprise calculating a metric based on the extracted signal characteristics of the detected backscattered signal corresponding to the highest power component of Channel Impulse Response.

In some embodiments, the metric may be based on a representation in a frequency domain of the extracted signal characteristics of the detected backscattered signal corresponding to the highest power component of Channel Impulse Response in a rolling time window.

In some embodiments, the representation in the frequency domain may be derived using an Inverse Fast Fourier Transform.

In some embodiments, the metric may be a rolling average based on the extracted signal characteristics of the detected backscattered signal corresponding to the highest power component of Channel Impulse Response in a rolling time window with a predefined length, the rolling time window comprising a time at which the detected WiFi signal was detected at the receiver component.

In some embodiments, the metric may be based on a representation in a frequency domain of the extracted signal characteristics of the detected backscattered signal corresponding to the highest power component of Chanel Impulse Response, wherein the metric is a mean of a median of absolute values of the a representation in the frequency domain in the rolling time window.

In some embodiments, the step of processing the extracted signal characteristics may comprise comparing the metric to a metric calculated over a previous time window.

In some embodiments, the monitoring condition may define an expected entity movement, wherein the step of processing the extracted signal characteristics comprises determining a movement performed by an entity sensed by the detected WiFi signal.

In some embodiments, the expected entity movement may be a predefined direction of movement of the entity, the method further comprising storing an entity count based on the determined direction of movement.

In some embodiments, the expected entity movement may be stored in association with a user actuatable device, wherein the user actuatable device may be actuated if the determined performed movement matches the expected entity movement.

In some embodiments, the step of processing the extracted signal characteristics may further comprise: determining if there is a difference between the metric and the metric calculated over a previous time window; and if there is a difference, determining if the difference meets a monitoring threshold.

In some embodiments, the method may further comprise a step of calibrating the sensing device, the step of calibrating the device comprising: calculating, for a historic time window, a historic metric, the historic time window corresponding to a time period of no motion in the place; calculating a default monitoring threshold based on the historic metric; monitoring the place for a predefined calibration period; determining a number of false positive monitoring results during the calibration period when using the default monitoring threshold; and if the number of false positive monitoring results exceeds an allowable false positive threshold, defining a modified monitoring threshold for use as the monitoring threshold during monitoring of the place.

According to a third aspect of the present invention, there is provided a sensing device for monitoring a place, the sensing device comprising: a transmitter component configured to transmit WiFi signals, the transmitter component comprising a transmitter antenna and a transmitter processor configured to generate the WiFi signals for transmission; a receiver component configured to detect backscattered WiFi signals, the backscattered WiFi signals having been reflected by a surface in the place after transmission from the transmitter component, the receiver component comprising a receiver antenna and a receiver processor configured to extract signal characteristics from the detected WiFi signals and to process the extracted signal characteristics to monitor the place; wherein the transmitter processor and the receiver processor are not in direct communication.

Brief Description of the Drawings

To assist understanding of embodiments of the present disclosure and to show how such embodiments may be put into effect, reference is made, by way of example only, to the accompanying drawings in which:

Figure 1 is a schematic diagram of a place monitoring system;

Figure 2 shows a prior art place monitoring system;

Figure 3 is a schematic diagram of a collocated WiFi sensing device;

Figures 4A-B schematically illustrate signal variations due to the presence or non-presence of entities in a room;

Figure 5 shows an example radiation pattern of a transmitter antenna;

Figure 6 is a schematic diagram of the collocated WiFi sensing device with antennas positioned for decoupling signals;

Figure 7 is an example method for triggering a security event based on detected signals;

Figure 8 is an example method for actuating a device based on detected signals;

Figure 9 is an example method for counting attendees based on detected signals;

Figure 10 is a schematic diagram illustrating the used of the collocated WiFi sensing device in a sensing network;

Figure 11 is a schematic diagram of a computing system in which embodiments of the sensing system may be implemented; and

Figure 12 is a schematic diagram of a client device in which aspects of the sensing system may be implemented.

Detailed Description

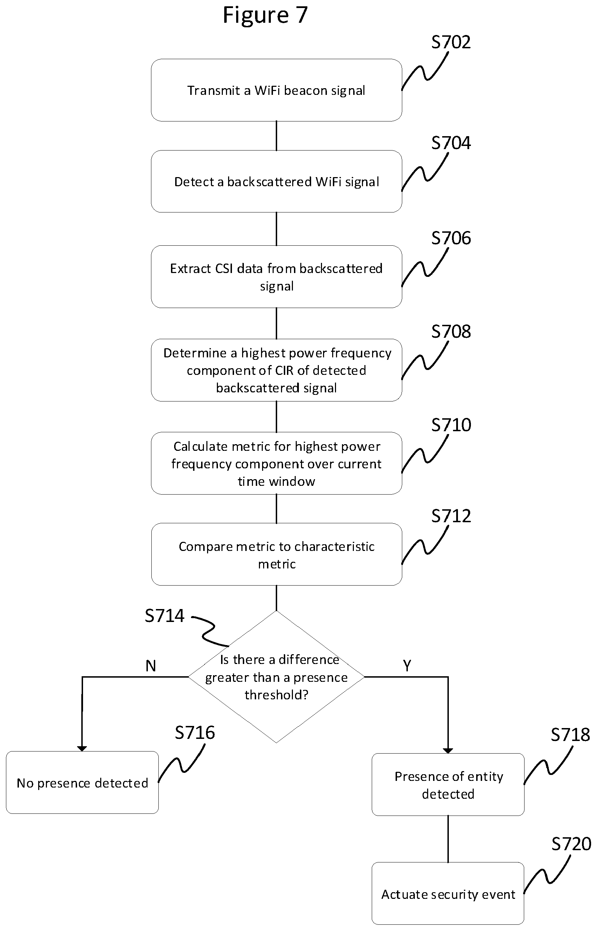

Wi-Fi Sensing is a technology that uses Wi-Fi signals to operate like a short-range passive radar by measuring how the signals interact with movement and the environment. By transmitting signals into the environment, Wi-Fi sensing systems can track motion and presence based on how the signals are reflected and deflected.
Wi-Fi sensing performance is correlated to channel width. The larger the channel width, the higher the resolution. Currently, Wi-Fi works in 2.4 GHz, 5 GHz, 6 GHz, and 60GHz bands. Channel width in the 2.4 GHz spectrum is 20 MHz or 40MHz, 5 GHz is 20 MHz , 40 MHz , 80 MHz , or 160 MHz, and 6 GHz band can be up to 1200 MHz (Wi-Fi 6E). The wavelengths of the Wi-Fi signal in these bands span from 4.2 cm (6 GHz band) to 12.4 cm (2.4 GHz band).
Such signals are well suited for motion detection, activity detection, and recognition of human bodies as well as the breathing rate and even heartbeat detection through DSP (digital signal processing), machine learning algorithms and other processing techniques. Wi-Fi sensing technology enables security, safety, and family care services in smart home and internet of things (IoT) applications. It supports a variety of features and applications such as motion detection, human activity detection and recognition and vital signs detection.
One problem that arises in WiFi sensing systems is the minimum space requirement needed between the transmitter and receiver devices in order to detect an entity.

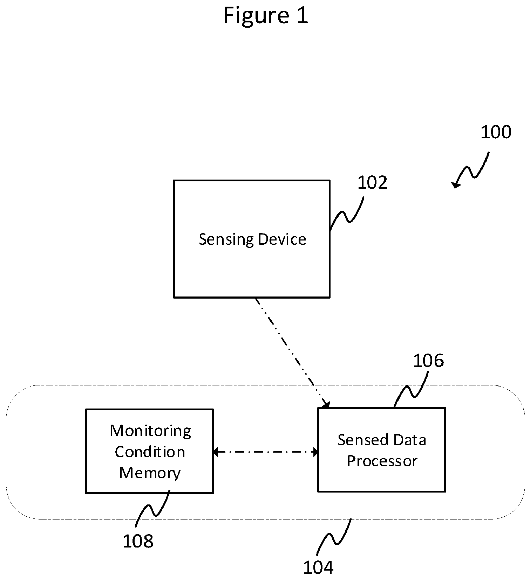

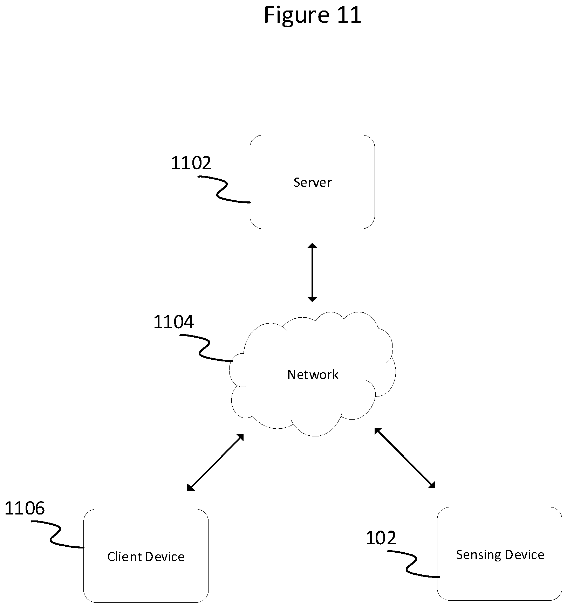

Figure 1 is a schematic diagram of a sensing system 100. The system comprises a sensing device 102, and a sensed data processor 106 and monitoring condition memory 108 implemented on a cloud computing environment 104. The cloud computing environment 104 is described in more detail below with reference to Figure 11. In essence, the cloud computing environment 104 comprises one or more remote servers which communicates with the sensing device 104 via a network. The cloud computing environment 104 may also communicate, via the network, with a user device in order to provide information to a user of the device relating to the sensed data.
In some embodiments, the sensed data processor 106 and monitoring condition memory 108 are instead implemented at the sensing device 102, which executes a computer program on hardware which executes the sensed data processor 106 and monitoring condition memory 108. Alternatively, the sensed data processor 106 and monitoring condition memory 108 are instead implemented at the user device, which is in communication with the sensing device 102.
The sensing device 102 is configured to both transmit and receive WiFi signals. Characteristic data relating to the received signals are sent to the cloud computing environment 104. The characteristic data is determined by a processor of the sensing device 102 on receiving the signals.
Once received at the cloud computing environment 104, the characteristic data relating to the signals received at the sensing device 102 is passed to the sensed data processor 106. The sensed data processor 106 has access to the monitoring condition memory 108, which stores rules defining how the characteristic data is to be processed, the conditions for determining that presence and/or motion is detected, and any consequences of the determination.
The sensed data processor 106 accesses the monitoring conditions memory 108 to determine how to process the characteristic data, processes the characteristic data as defined, and compares the processed data to conditions held in the monitoring condition memory 108. If the conditions are met, the sensed data processor causes a defined action to be actuated, the defined action being the consequence of the determination. Some examples are set out below with reference to Figures 7 to 9.

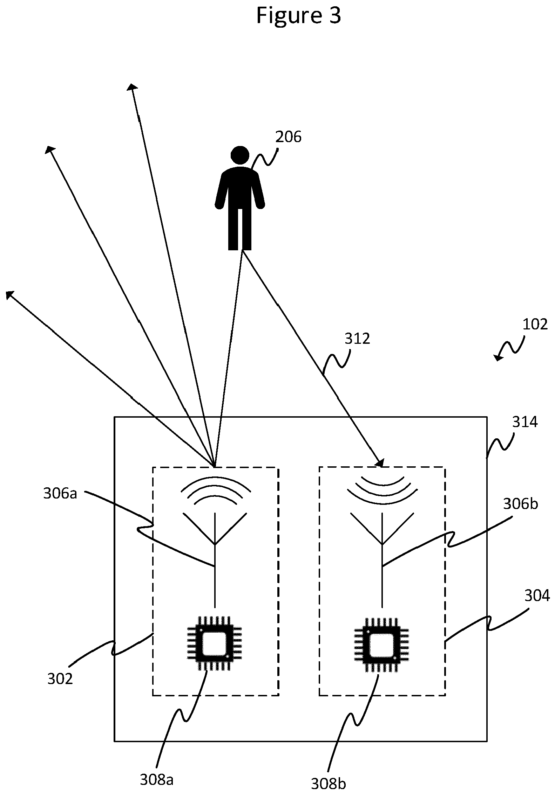

Figure 3 shows an example sensing device 102. The sensing device 102 comprises a transmitter component 302 and a receiver component 304, both located in a housing 314. The sensing device 102 may also be referred to as a collocated WiFi sensing device because the transmitter component 302 and receiver component 304 are located within the same housing 314, and the received component 304 is configured to receive and process signals transmitted from the transmitter component 302 of the same sensing device 102. The receiver component 304 may be said to "listen to" the transmitter component 302 or "listen for" signals from the transmitter component 302.
The transmitter component 302 comprises an antenna 306a and a processor 308a. The processor 308a generates WiFi signals for transmission by the antenna 306a. The antenna 306a transmits the WiFi signals as a beacon. The antenna 306a may transmit WiFi signals continuously or intermittently. For example, the transmitter component 302 may have a beacon rate of 100Hz. The transmitter component 302 may be directional such that the beacon is only transmitted over a limited angle.

The transmitter component 302 may transmit signals over a channel which is different to the WiFi communication channel. This prevents the WiFi communication channel from becoming congested, and allows monitoring of the place to be continuous. The receiver component 304 comprises an antenna 306b and a processor 308b. The antenna 306b is configured to detect WiFi signals transmitted from the transmitter component 302, and the processor 308b is configured to extract characteristic data from the detected signals.

The processors 308a, 308b of the transmitter and receiver components 302, 304 are not in direct communication. That is, there is no wired communication channel between the processor 308a, 308b, such that there is no electrical interface between the two processors 308a, 308b. The processors 308a, 308b function independently of one another such that the processing performed at the receiver processor 308b is not dependent on the functioning of the transmitted processor 308a.

The transmitter component 302 transmits WiFi signals. When the place is unoccupied, the transmitted WiFi signals are reflected by fixed surfaces in the place, before being received at the receiver component 304. "Fixed surfaces" here refers to surfaces which are present in the place which are not regularly moved, and includes both permanently fixed surfaces such as walls and temporarily fixed surfaces such as furniture. These reflected signals are referred to as backscattered signals.

The characteristics of the signals received at the receiver component 304 when the place is unoccupied are referred to as characteristic signal characteristics.

When the place is no longer unoccupied, that is an entity 206 is present, some of the transmitted WiFi signals will be reflected by the entity 206 rather than the fixed surface, such that the backscattered signals are received having been reflected by the entity 206.

As can be seen in Figure 3, the transmitter component 302 transmits the WiFi beacon signal. Some of the transmitted beacon travels along signal paths which are not disrupted by the entity 206. However, the portion of the beacon transmitted in the direction of the entity 206 is reflected by the entity such that its path 312 between the transmitter component 302 and the receiver component 304 is altered.

The signal characteristics of the signal traveling along path 312 are different from the characteristic signal characteristics because the path is different. The difference in characteristics can be used to determine presence of the entity 206 and/or its motion.

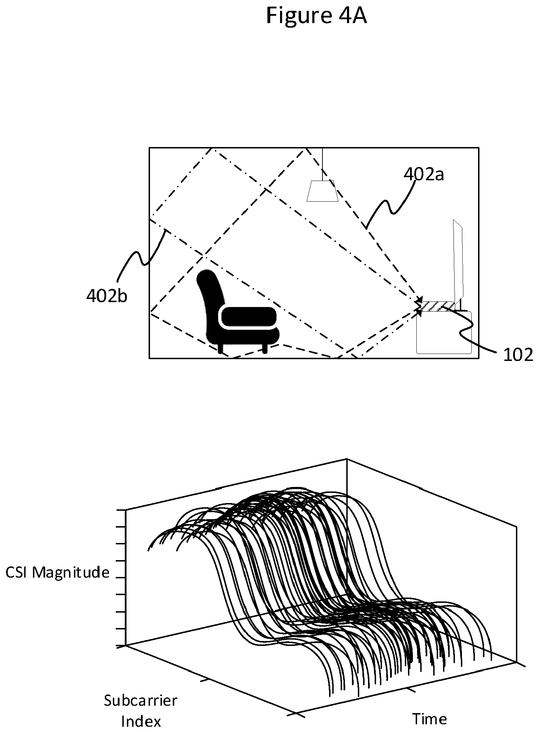

Figure 4A shows the living room in an "undisturbed" or "unoccupied" state, i.e. the room is empty, with nothing moving in the room. Two signal paths 402a, 402b are shown, with the signals being both transmitted and received by the device 102. In the example of Figure 4A, the living room is the place being monitored by the sensing deice 102.

The first signal follows path 402a, being transmitted downwards and to the left of the sensing device 102, reflecting off the floor, followed by the base of the sofa, then by the floor again, followed by the left-hand wall and the ceiling, before being received at the receiver component 304 of the sensing device 102.

The second signal follows path 402b, being transmitted upwards and slightly left of the device 102, reflecting off the ceiling, the left-hand wall, and the floor, before being received at the receiver component 304 of the sensing device 102.

When the room is empty, each of these signals is considered a characteristic signal and the signal data a characteristic data representation of the indoor environment. That is, the characteristics of each of the signals received at the receiver component 304 of the sensing device 102 relate to the layout of the room.

Figure 4A also shows a graph of channel state information (CSI) for the signal traversing path 402b which may be used to sense an entity in a room. The graph of Figure 4A shows a CSI magnitude over subcarrier index over time. It will be appreciated that the graph shown is provided for illustration purposes only.

The CSI is determined based on changes in both amplitude, phase, or both of the received signals. The CSI shown is that corresponding to the empty room and is therefore considered the characteristic data representative of the environment. This CSI is otherwise referred to herein as the characteristic CSI, or characteristic CSI fingerprint. The signals shown in Figure 4A are characteristic signals as they represent the environment in an undisturbed or reference state. The characteristic CSI fingerprint is used for presence sensing.

The areas of the room which are sensed by the signals are referred to herein as signal zones.

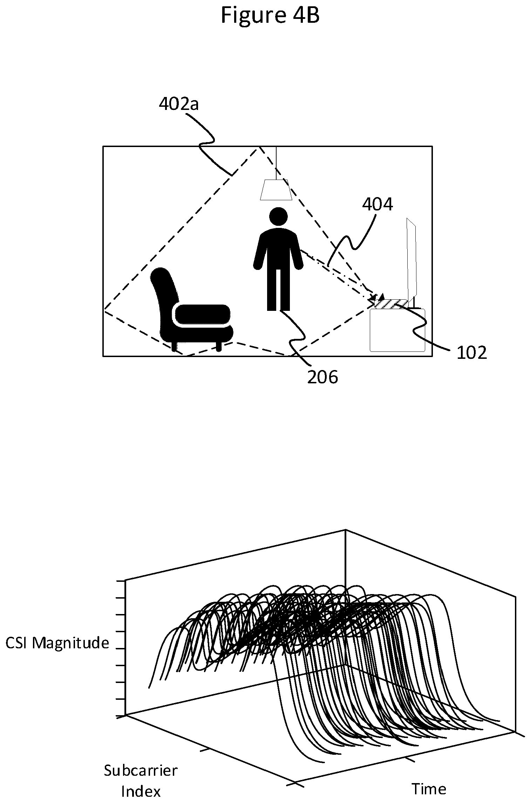

Figure 4B shows the same room with sensing device 102 when a person 206 is in the room. It can be seen that the signal traveling along paths 402a is undisturbed because the person 206 is not in the signal zone of this signal. That is, the person 306 is not in the signal path 402a.

The signal which, when the room is empty, travels along path 402b has been disturbed. This signal now travels along path 404. This change in signal path results in a change in the characteristics of the signal, as shown by the graph in Figure 4B.

If the person 206 were to move within the room, the signal path would again change, and so also would the characteristics of the received signal. Motion of the person 206 is detected by comparing the characteristics of the most recently received signal to those of the previously received signal, or another recent but past signal. The previously received signal and the recent but past signal may be referred to as historic signals as they are transmitted from the sensing device 102 prior to the most recently received, or current, signal.

As set out above, the transmitter and receiver components are housed in the same device. The receiver is thus arranged to receive signals which have been transmitted from the transmitter into the place and reflected back to the sensing device, referred to herein as "backscattered signals". The receiver also receives signals transmitted directly from the transmitter component to the receiver component, referred to herein as "dominant signals". That is, the dominant signals travel only within the sensing device 102.

The dominant signals carry no useful information about the place and therefore are not of use in the sensing system. It is therefore desirable to process only the backscattered signals.

Since the dominant signals only travel a short distance before being detected, the dominant signals have not attenuated since transmission. It is therefore also desirable to decouple the dominant signals.

There are several ways to achieve decoupling. The first is to use hardware decouplers, in a so called In-Band Full-Duplex (IBFD) Single-Antenna System". In this setup, a single antenna is used which functions as both the transmitter antenna and the receiver antenna. The use of these systems allows the transmitter and receiver components to operate simultaneously. A directional coupler may be positioned between the closely spaced transmitter and receiver components. The coupler may be a hybrid coupler, such as a 3dB/180° hybrid coupler. The hybrid coupler acts as a passive self-interference cancellation (SIC) circuits for the sensing device. Specifically, the hybrid coupler is employed as a differential feeding network for the receiver to achaive high port-to-port isolation thought an effective SIC operation. One possible antenna is provided in H. Nawaz et al. A Compact, Bistatic Antenna System with Very High Interport Isolation for 2.4 GHz In-Band Full Duplex Applications. However, the required additional hardware increases cost of the sensing device.

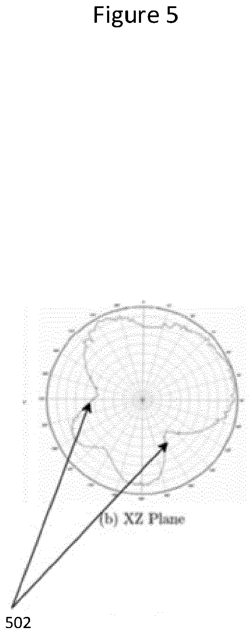

Another way of decoupling the dominant signals is by exploiting the properties of radiation patterns of the transmitter and receiver antennas. Figure 5 shows an example radiation pattern of an antenna. The radiation pattern shows the gain of the radiation of signals, both transmitted and received, of an example antenna.

It can be seen from Figure 5 that the gain of the radiation is not even all the way around the antenna. Even if the antenna is omnidirectional, the radiation pattern is usually not perfectly even in all directions.

Two areas of comparatively low gain 502 can be seen on the in the radiation pattern. These areas 502 correspond to locations radially around the antenna. The radiation pattern can be used to determine suitable relative positions for the transmitter and receiver antennas in the sensing device so as to maximise decoupling.

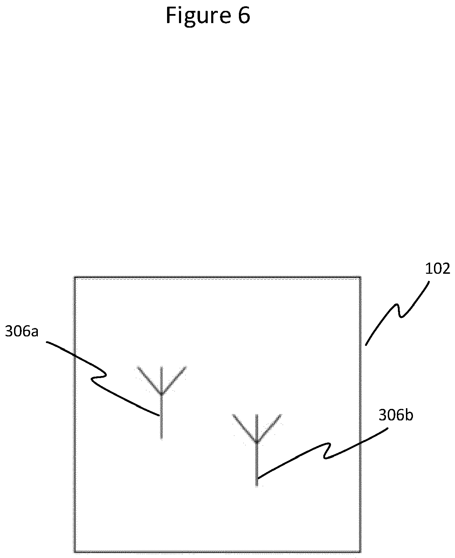

Assuming the transmitter and receiver antennas 306a, 306b exhibit the radiation pattern of Figure 5, the antennas 306a, 306b can be arranged in a transmitting plane as shown in Figure 6 in order to maximise the decoupling, such that there is a good level of isolation of the receiver antenna 306b from the transmitter antenna 306a. The antennas 306a, 306b are arranged in a trasnmitting plane. The WiFi signals are transmitted, as shown by the radiation pattern of Figure 5, in substantially all directions radially from the transmitter antenna 306a.

It can be seen that the receiver antenna 306b is positioned at roughly 140° relative to the transmitting antenna 306a. This corresponds to one of the areas of low gain 502 of the transmitting antenna 306a - see Figure 5 - such that the signals transmitted from the trasnmitting antenna 306a in the direction of the receiving antenna 306b have a lower power when compared to the signals transmitted in other directions.

In the example of Figure 6, the receiver antenna 306b has been located at the relative location at which the transmitted signal is weakest. However, at this location, the receiver strength of the antenna 308 is relatively high. The relative locations of the antenna 306a, 306b are determined so as to maximise decoupling. In some instances, this may be achieved by positioning the receiver antenna 306b at a location of relatively higher gain of the transmitter antenna 306a, but such that the transmitter antenna 306a is in a region of low gain relative to the receiver antenna 306b.

Once detected at the receiver antenna 306b, signals are processed to extract the signal characteristics. Special signal processing techniques are required because the received signals are faint.

The following process may be used to process the received signals. In this example, the signal characteristics are CSI data.

1. CSI data is pre-processed. This step comprises removing noise from the received signals for example.

2. The highest power component of Channel Impulse Response (CIR) of the received signal is calculated. This component is labelled $h_0$. The following steps are implemented:

a. An inverse fast Fourier transform (IFFT) is performed on the CSI data, such that $h = ifft(CSI)$.
b. Set $h_0 = h(0)$.

3. Define a metric $m = mean(median(abs(h_0)))$ in a sliding window. The sliding window has a predefined length. For example, the sliding window may have a length of the order of 1 second, for example 1 second or 3 seconds. The sliding window length may depend on the sampling rate and the speed of motion which the system is attempting to detect. The sliding window may therefore be adjusted for the use case.

It will be appreciated that the metric may be defined in some other way. For example, some other average based on $h_0$ may be calculated.

The value of the metric can then be used to determine if there is movement and/or sense the presence of an entity in the place.

The metric value may be calculated at the sensing device 102 by the processor 308b of the receiver component 304. Alternatively, the processor 308b may extract the CSI data and transmit this to a remote computing system for processing.

The instantaneous metric value reflects an instantaneous fingerprint of the place. Any motion in the place is detected by monitoring instantaneous metric values. If there is a change in the instantaneous metric value, movement is detected in the place. The instantiations metric value can be compared to a metric value calculated when the place is unoccupied, herein referred to as the characteristic metric value, to detect presence in the place. Example use cases for the metric are set out below. The matric value therefore provides a simpler means for comparing the CSI data for the current and characteristic signals.

A threshold metric value difference may be defined, also referred to herein as a monitoring threshold. The difference between metric values must be at least equal to the threshold metric value difference in order for the system to determine that there is a difference between the metric values being compared. The threshold metric value difference is tuned suitable for the implementation such that the rate of false positives is reasonable for a desired level of sensitivity. For example, in a security system, a system with lower sensitivity and lower false positive rate is desired in comparison to an automation system, in which some false positives are acceptable in return for higher sensitivity.

A calibration stage is needed to tune thresholds of detection and reduce false alarms rate. The calibration stage is performed when the place is unoccupied, i.e. using the metric value corresponding to the characteristic signal characteristics.

As a default, a metric is deemed to be different to a previously calculated metric if it falls outside the range of:

$$mean(m_0) \pm 3var(m_0)$$

where $m_0$ is the previously calculated threshold. $3var(m_0)$ is a default threshold.

During calibration, the threshold is tuned. A criterion is defined for successful calibration. For example, a criterion of no false alarms in a given time period may be defined. In some embodiments, a small number, such as 1 or 2, false alarms may be defined as allowable in the time period and therefore the criterion is defined as such.

The calibration of the sensing device 102 is dependent on the location of the device as the surroundings, and so signal characteristics, have an effect on the required threshold value. Therefore, the calibration stage is performed whenever the location of the sensing device 102 is changed. A user of the sensing device 102 may initiate the calibration stage via a user device which communicates with the sensing device 102. Alternatively, the sensing device may be provided with a user actuatable component, such as a button, which a user can press in order to initiate the calibration stage.

Some example uses for the sensing device as described herein will now be described.

Figure 7 shows an example method for actuating a security event. At step S702 the transmitter component 302 transmits a WiFi beacon signal, the corresponding backscattered signal being detected at the receiving component 304 at step S704.

The CSI data is extracted from the backscattered signal by the processor 308b of the receiver component 304, which executes a CSI data extract algorithm, step S706.

The highest power component of CIR of the backscattered signal is determined at step S708, and the metric for said component calculated at step S710.

The metric value calculated at step S710 is then compared to the characteristic metric representing the empty place, and it is determined at step S712 if there is a difference. The difference is compared to a presence threshold, which is the threshold metric value difference defined for detecting presence in the place.

If no difference is detected, or if the difference is less than the presence threshold, it is determined that no presence is detected, step S716, such that no security events are actuated.

If, however, the difference meets or is greater than the presence threshold, it is determined that there is an entity present in the place, step S718, and a predefined security event is actuated at step S720. One example of a security event which may be actuated is the sounding of an alarm.

As discussed above, the metric may be calculated by the processor 308b of the receiving component 304 or by a remote computing device, for example by the sensed data processor 106 of the cloud computing environment 104.

The sensed data processor 106 determines if the difference is greater than the presence threshold. The presence threshold is stored in the monitoring condition memory 108, along with the characteristic metric. The monitoring condition memory 108 also stores the security event to be actuated in the event that an entity is detected. The sensed data processor 106, on determining that an entity is present, actuates the security event by transmitting a signal to a corresponding security device as defined in the monitoring condition memory 108. For example, in the case of sounding an alarm, the sensed data processor 106 transmits a signal to the alarm which causes the alarm to sound.

A monitoring condition stored in the monitoring condition memory 108 defined the characteristic metric, monitoring threshold, and security event to be actuated, and the relationship between them. For example, the monitoring condition in the above example defines that the alarm is actuated if the difference between the metric and the characteristic metric exceeds the presence threshold.

As set out above, the characteristic signal characteristics, and so the characteristic metric are derived from backscattered signals received at the receiver component when the place is unoccupied. These backscattered signals may be referred to as historic signals.

The method set out in Figure 7 can also be used, in modified form, for motion detection and motion activation. In such an embodiment, the metric is instead compared to a metric of a previous, but recent time window, that is a metric derived from historic signals. If there is a difference in the metrics exceeds the threshold, it is determined that there is movement in the place and the associated motion activated event is activated.

In some embodiments, it may be determined if there has been a difference between metrics over a predefined motion detection time period, such that the motion activated event is only implemented if motion is detected for at least the motion detection time period.

In the case of motion detection, the motion condition defines the threshold difference and motion detection time period and the event to be activated if the difference is greater than the threshold for at least the motion detection time period.

It will be apricated that, while the metric is used to detect presence and/or motion of an entity in the place in the above example, the use of the metric is not necessary. Instead, the raw CSI data may be used to detect presence/motion. This avoids the need to calculate $h_0$. In such an embodiment, the CSI data of the detected backscattered signal is compared to the CSI fingerprint, or CSI data of a previous signal, and it is determined from the comparison if there is difference greater than a detection threshold. If there is a difference greater than the threshold, the

The use of the metric is preferred over the use of raw CSI data in low-power devices that have limited resources. By calculating ho, the speed of the algorithm can be optimized. This is because the metric is a single number, whereas the CSI data is 52 numbers, and therefore the computing power required to perform the comparison is lower. However, the use of the metric instead of the raw CSI data does result in the loss of some information, and therefore may not be suitable for other uses in which more specific detail about entity movement is required.

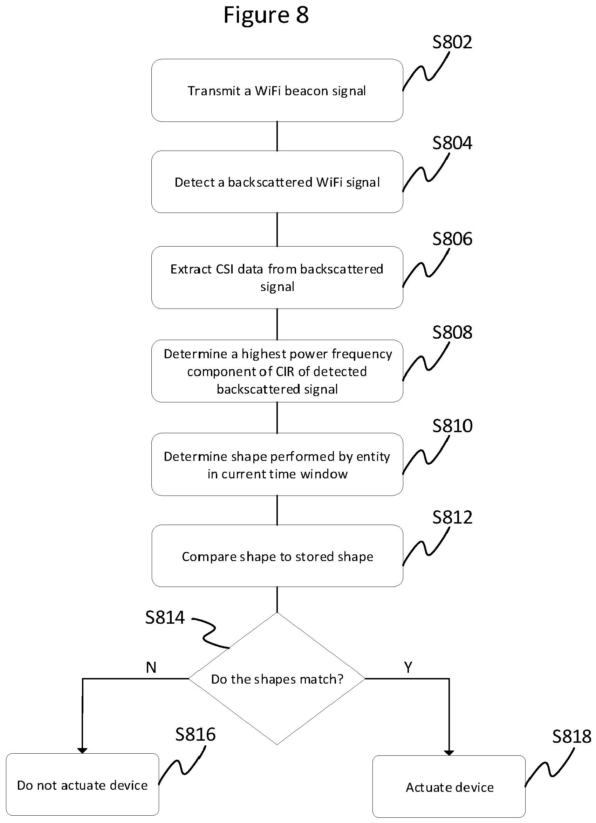

The sensing device 102 may be used for gesture recognition. Figure 8 provides an example method.

At step S802 the transmitter component 302 transmits a WiFi beacon signal, the corresponding backscattered signal being detected at the receiving component 304 at step S804.

The CSI data is extracted from the backscattered signal by the processor 308b of the receiver component 304, which executes a CSI data extract algorithm, step S806. The highest power component of CIR of the backscattered signal is determined at step S808.

The CSI data corresponding to the highest power component is then processed, by the sensed data processor 106, to determine a shape, or gesture, performed by the sensed entity in the current time window, step S810. As discussed earlier, the CSI data of a signal varies depending on the location of an entity in the place. This equally applies to smaller movements performed by an entity. In order to determine the shape being performed by the user, the CSI data of each received backscattered signal is compared to the previous signal, and the variations used to determine the shape.

In gesture recognition, the monitoring condition stored at the monitoring condition memory 108 defines a shape or gesture to be performed by an entity and an event to be actuated if the performed shape matches the stored shape. There may also be a tolerance defined, which defines an allowable difference between the stored shape and the preformed shape while still satisfying the condition.

The sensed data processor 106 accesses the stored shape from the motion detection memory 108 and compares the two shapes at step S812 to determine if the shapes match, step S814.

If the shapes do not match, the corresponding device is not actuated, step S816. In some embodiments, a restrictive event may be actuated on determining that the shapes do not match. For example, the entity may be prevented from attempting the gesture again for a defined locked time", defined in the monitoring condition.

However, if it is determined that the shapes do match, the device is actuated at step S818. The sensed data processor 106 transits an actuation signal to the device, causing it to be actuated.

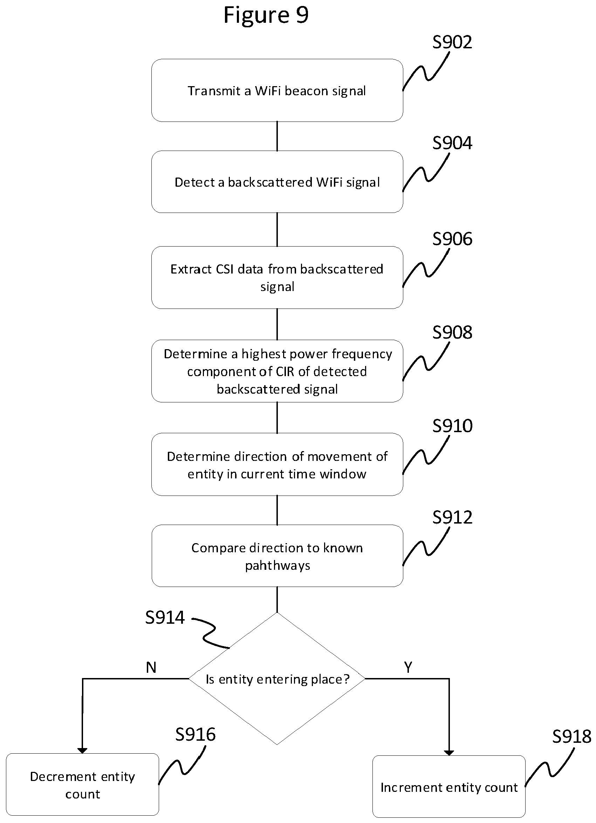

In another embodiment, the sensing device 102 is used for counting entities entering and exiting a place. The number of entities in the place is stored in a memory accessible to the sensed data processor 106. Figure 9 shows an example method for using the sensing device 102. In this example, the number of entities in the place is stored in a memory accessible to, and modifiable by, the sensed data processor 106, and is referred to as an entity count.

At step S902 the transmitter component 302 transmits a WiFi beacon signal, the corresponding backscattered signal being detected at the receiving component 304 at step S904.

The CSI data is extracted from the backscattered signal by the processor 308b of the receiver component 304, which executes a CSI data extract algorithm, step S906. The highest power frequency component of CIR of the backscattered signal is determined at step S908.

The CSI data corresponding to the highest power frequency component is then processed, by the sensed data processor 106, to determine a direction of movement of the sensed entity in the current time window, step S910. This is determined based on changes in the CSI data over a period of time, that is by comparing the CSI data of a sequence of received backscattered signals to identify differences.

The monitoring condition stored in the monitoring condition memory 108 defines a pathway and an entry status corresponding to movement along the pathway. For example, if the pathway defines movement between a point A and a point B, the entry status when moving from A to B may be defined as entering" while the entry status when moving from B to A may be defined as exiting".

At step S912, the direction of movement is compared to the monitoring condition. The sensed data processer 106 determines, at step S914, the entry status associated with the determined direction of movement.

If the direction of movement of the entity corresponds to the entering status, the sensed data processor 106 increments the entity count, step S918.

If instead the direction of movement of the entity corresponds to the exiting status, the sensed data processor 106 decrements the entity count, step S916.

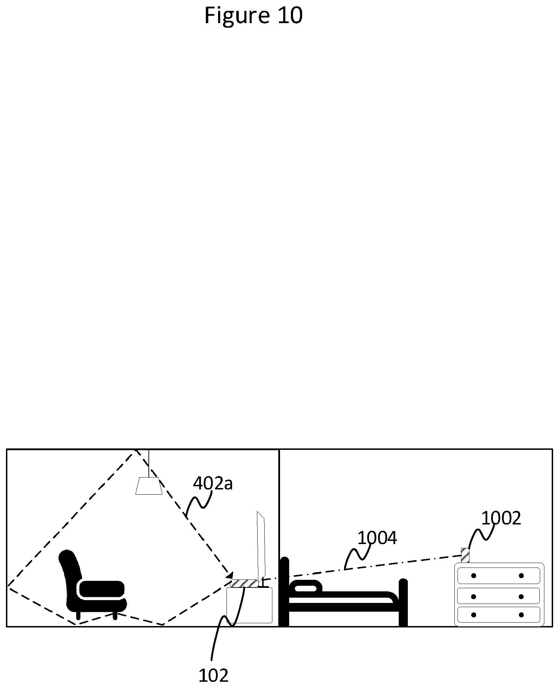

The sensing device 102 may be used within a sensing network with other devices which are configured to transmit and/or receive WiFi signals. An example multi-device sensing network is shown in Figure 10 sensing two rooms of a house.

The left-hand room corresponds to that shown in Figures 4A-B. Only one of the signals, traversing path 402a, is shown for clarity.

A transmitter device 1002 is located in the right-hand room. The transmitter device 1002 and the sensing device 102 together form a sensing network. It will be appreciated that further additional transmitter devices may be included in the sensing network in a similar manner.

The transmitter device 1002 operates in a similar manner to the transmitter component 302 of the sensing device 102. That is, it comprises a processor for generating WiFi signals, which are transmitted as a WiFi beacon by an antenna of the transmitter device 1002.

The receiver component 304 of the sensing device 102 is configured to detect, as well as the signals transmitted by the transmitter component 302, signals transmitted by the transmitter device 1002. On detecting a signal, the processor 308b of the receiver component 304 determines, based on characteristics of the detected signal, a source of the detected signal, i.e. whether it was transmitted by the sensing device 102 or the transmitter device 1002.

The monitoring conditions stored in the monitoring condition memory 108 also define a signal source.

The detected signals received from the transmitter device 1002 are processed in the same way as those received from the transmitter component 302 of the sensing device 102.

When determining if the monitoring condition is satisfied, and therefore the action to be triggered, the sensed data processor 106 considers also the source of the detected signal.

The sensing network may additionally or alternatively comprise one or more receiver devices. The receiver device is configured to receive signals transmitted by the transmitter component 302 of the sensing device 102. The monitoring condition, in such an embodiment, comprises a detecting device such that the monitoring condition being satisfied depends on the device at which the signal is received.

Figure 11 shows an example computing environment for the sensing device 102 described herein. A server 1102 communicates with a client device 1106 and the WiFi sensing device 102 via a network 1104, such as the Internet. The server 1102 may be a cloud computing environment 104, or another server remote from the sensing device 102. The client device 1106 may be a personal computing device such as a laptop or smart phone.

The action triggered by a monitoring condition being satisfied may be a notification to the client device 1106. Alternatively or additionally, a user of the sensing device may be able to monitor activity within the place via an application implemented on the client device. Via this application, the user may be able to see previous monitored events within the place, as well as current events. The user may be able to initiate configuration using the application.

If multiple devices are used in a sensing network, as described with reference to Figure 10, each device may communicate with the server 1102 via the network 1104.

In some embodiments, the sensed data processor 106 is implemented on the client device 1106. In such an embodiment, the monitoring condition memory 108 may be stored either at the client device 1106 or the service 1102.

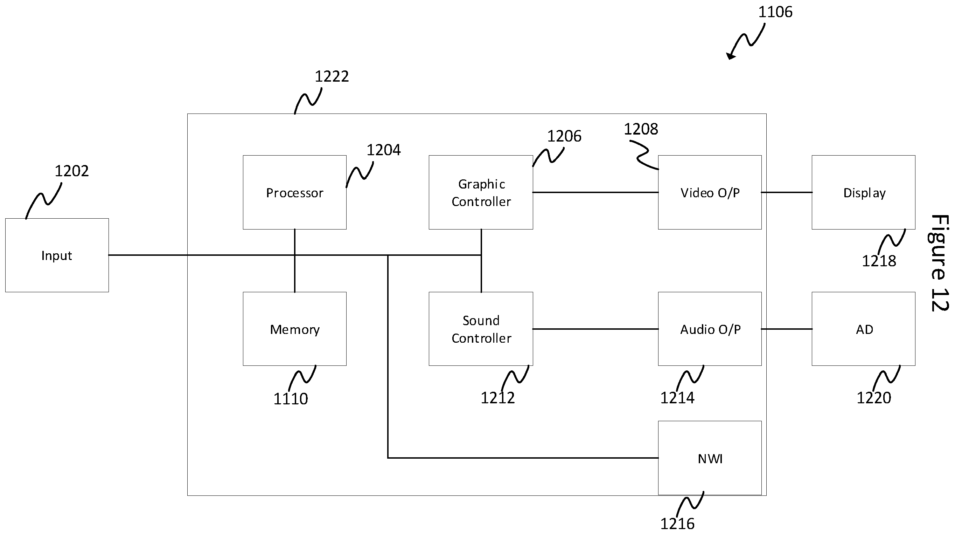

A schematic view of the client device 1106 according to an embodiment is shown in Figure 12. The user device 1106 has a controller 1222. The controller 1222 may have one or more processors 1204 and one or more memories 1210. For example, a computer code of executing the configuration method or sensed data processing on the user device 1106 may be stored in the memory 1210. The monitoring conditions may also be stored at the memory 1210. The memory 1210 may also store the application which provides the user with capabilities for monitoring the place and receiving sensing information and alerts, the application being implemented by the processor 1204.

The controller 1222 is also shown as having a graphics controller 1206 and a sound controller 1212. It should be appreciated that one or other or both of the graphics controller 1206 and sound controller 1212 may be provided by the one or more processors 1204. Other functional blocks may also be implemented by suitable circuitry or computer code executed by the one or more processor 1204.

The graphics controller 1206 is configured to provide a video output 1208. The sound controller 1212 is configured to provide an audio output 1214. The controller 1222 has a network interface 1216 allowing the device to be able to communicate with a network such as the Internet or other communication infrastructure.

The video output 1108 may be provided to a display 1218. The audio output 1214 may be provided to an audio device 1220 such as a speaker and/or earphones(s).

The device 1106 may have an input device 1202. The input device 1202 can take any suitable format such as one or more of a keyboard, mouse, or touch screen. It should be appreciated that the display 1218 may in some embodiments also provide the input device 1202, for example, by way of an integrated touch screen.

The blocks of the controller 1222 are configured to communicate with each other via an interconnect such as a bus or any other suitable interconnect and/or by point-to-point communication.

It should be appreciated that, in some embodiments, the controller 1222 may be implemented by one or more circuits, at least in part.

It should be appreciated that embodiments may be deployed in different system architectures. For example, the sensed data processor 106 may be implemented as a computer program that is stored in the memory 1210 of the user device 1106. In another system architecture, the sensed data processor 106 and monitoring condition memory 108 are stored at the server 1102, and implemented by a processor of the server 1102. Configuration information is then provided by the network 1104 to the user device 1106 for providing to the user via the user interface.

It will be appreciated that the above embodiments have been described only by way of example. Other variations and applications of the present invention will be apparent to the person skilled in the art in view of the teaching presented herein. The present invention is not limited by the described embodiments, but only by the accompanying claims.

**Claims**

1. A sensing system for monitoring a place, the sensing system comprising:

   a sensing device for monitoring a place, the sensing device comprising:

   a transmitter component configured to transmit WiFi signals;
a receiver component configured to detect backscattered WiFi signals, the backscattered WiFi signals having been reflected by a surface in the place after transmission from the transmitter component; and

   one or more processors configured to extract signal characteristics from the detected WiFi signals; process the extracted signal characteristics; and compare the extracted signal characteristic to extracted signal characteristics of a historic backscattered WiFi signal received at the receiver component to monitor the place.

2. The sensing system of claim 1, wherein the transmitter component comprises one or more transmitter antennas and one or more transmitter processors configured to generate the WiFi signals for transmission by the one or more transmitter antennas.

3. The sensing system of claim 1 or claim 2, wherein the receiver component comprises one or more receiver antennas and one or more receiver processors, wherein the one or more receiver processors are configured to extract the signal characteristics from the detected WiFi signals and process the extracted signal characteristics;
   wherein, optionally, the one or more receiver processors are configured to compare the extracted signal characteristic to the extracted signal characteristics of the historic backscattered WiFi signal received at the receiver component.

4. The sensing system of claim 3 when dependent on claim 2, wherein the one or more transmitter processors and the one or more receiver processors are not in direct communication.

5. The sensing system of any preceding claim, wherein the receiver component detects WiFi signals comprising a dominant signal transmitted directly from the transmitter component to the receiver component;
   wherein, optionally, the sensing device further comprises one or more hardware decouplers for attenuating the dominant signal while maintaining sensitivity to the backscattered signal.

6. The sensing system of any preceding claim, wherein the transmitter component and the receiver component are arranged in a trasnmitting plane, wherein a direction of peak gain of the transmitter component is not coplanar with the transmitting plane;
   wherein, optionally, the transmitter component transmits WiFi signals radially in substantially all directions, wherein the receiver component is arranged in the transmission plane such that the transmitted WiFi signal transmitted in the direction of the receiver component has a relatively low power when compared to the power of the WiFi signal transmitted in the direction of peak gain.

7. The sensing system of any preceding claim, wherein the transmitter component and the receiver component are housed in the same housing.

8. The sensing system of any preceding claim, further comprising one or more transmitter devices, wherein the receiver component is further configured to detect reflected WiFi signals, the reflected WiFi signals having been reflected by a surface in the place after transmission from the one or more transmitter devices.

9. A computer-implemented method for monitoring a place, the method comprising:

   transmitting, from a transmitting component of a sensing device, a WiFi signal;
   detecting, at a receiving component of the sensing device, backscattered WiFi signals, the backscattered WiFi signals having been reflected by a surface in the place after transmission from the transmitting component;
   extracting, from the detected backscattered WiFi signals, signal characteristics; and
   processing the extracted signal characteristics and comparing the extracted signal characteristic to extracted signal characteristics of a historic backscattered WiFi signal received at the receiver component to determine if a monitoring condition is satisfied.

10. The method of claim 9, further comprising calculating a highest power component of Channel Impulse Response of the detected backscattered WiFi signal, wherein the step of processing the extracted signal characteristics comprises processing the extracted signal characteristics of the detected signal corresponding to the highest power component of Channel Impulse Response of the detected backscattered signal.

11. The method of claim 10, further comprising calculating a metric based on the extracted signal characteristics of the detected backscattered signal corresponding to the highest power component of Channel Impulse Response.

12. The method of claim 11, wherein the metric is based on a representation in a frequency domain of the extracted signal characteristics of the detected backscattered signal corresponding to the highest power component of Channel Impulse Response in a rolling time window.

13. The method of claim 11, wherein the metric is a rolling average based on the extracted signal characteristics of the detected backscattered signal corresponding to the highest power component of Channel Impulse Response in a rolling time window with a predefined length, the rolling time window comprising a time at which the detected WiFi signal was detected at the receiver component.

14. The method of claim 13, wherein the metric is based on a representation in a frequency domain of the extracted signal characteristics of the detected backscattered signal corresponding to the highest power component of Chanel Impulse Response, wherein the metric is a mean of a median of absolute values of the a representation in the frequency domain in the rolling time window.

15. A sensing device for monitoring a place, the sensing device comprising:

   a transmitter component configured to transmit WiFi signals, the transmitter component comprising a transmitter antenna and a transmitter processor configured to generate the WiFi signals for transmission;
   a receiver component configured to detect backscattered WiFi signals, the backscattered WiFi signals having been reflected by a surface in the place after transmission from the transmitter component, the receiver component comprising a receiver antenna and a receiver processor configured to extract signal characteristics from the detected WiFi signals and to process the extracted signal characteristics to monitor the place;
   wherein the transmitter processor and the receiver processor are not in direct communication.

Figure 1

100

102

Sensing Device

106

Monitoring
Condition
Memory

Sensed Data
Processor

108

104

# Figure 2

# Figure 3

# Figure 4A

# Figure 4B

# Figure 5

(b) XZ Plane

502

# Figure 6

# Figure 7

S702

Transmit a WiFi beacon signal

S704

Detect a backscattered WiFi signal

S706

Extract CSI data from backscattered signal

S708

Determine a highest power frequency component of CIR of detected backscattered signal

S710

Calculate metric for highest power frequency component over current time window

S712

Compare metric to characteristic metric

S714

Is there a difference greater than a presence threshold?

N

Y

S716

No presence detected

S718

Presence of entity detected

S720

Actuate security event

# Figure 8

Transmit a WiFi beacon signal — S802

Detect a backscattered WiFi signal — S804

Extract CSI data from backscattered signal — S806

Determine a highest power frequency component of CIR of detected backscattered signal — S808

Determine shape performed by entity in current time window — S810

Compare shape to stored shape — S812

S814 — Do the shapes match?

N → Do not actuate device — S816

Y → Actuate device — S818

# Figure 9

S902

Transmit a WiFi beacon signal

S904

Detect a backscattered WiFi signal

S906

Extract CSI data from backscattered signal

S908

Determine a highest power frequency component of CIR of detected backscattered signal

S910

Determine direction of movement of entity in current time window

S912

Compare direction to known pahthways

S914

Is entity entering place?

N

Y

S916

Decrement entity count

S918

Increment entity count

# Figure 10

402a

1002

1004

102

# Figure 11

1102

Server

1104

Network

1106

Client Device

102

Sensing Device

# Figure 12

Europäisches
Patentamt

European
Patent Office

Office européen
des brevets

# EUROPEAN SEARCH REPORT

Application Number

EP 22 15 4627

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 523 760 B1 (KRAVETS OLEKSIY [CA] ET AL) 20 December 2016 (2016-12-20) | 1-9,15 | INV. H04B17/391 |
| A | * columns 1,2,6,11; figure 8 * | 10-14 | H04B17/309 H04L25/02 |
| X | "Human Movement Detection in Wi-Fi Mesh Networks ED  - Darl Kuhn", IP.COM, IP.COM INC., WEST HENRIETTA, NY, US, 13 December 2017 (2017-12-13), XP013176907, ISSN: 1533-0001 | 1-9,15 | H04W84/18 |
| A | * pages 2,4; figure 2 * | 10-14 | |
| X | KIRAN JOSHI ET AL:  "WiDeo: Fine-grained Device-free Motion Tracing using RF Backscatter", USENIX, USENIX, THE ADVANCED COMPUTING SYSTEMS ASSOCIATION , 4 May 2015 (2015-05-04), pages 196-211, XP061024737, Retrieved from the Internet: URL:https://www.usenix.org/sites/default/files/nsdi15_full_proceedings_interior.pdf [retrieved on 2015-05-04] | 1-9,15 | |
| A | * page 190 * * Section 4.2 * | 10-14 | |

TECHNICAL FIELDS SEARCHED (IPC)

H04B
H04W
H04L

The present search report has been drawn up for all claims

| Place of search | Date of completion of the search | Examiner |
|---|---|---|
| The Hague | 8 July 2022 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 4627

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2022

| Patent document cited in search report | | Publication date | Patent family member(s) | | Publication date |
|---|---|---|---|---|---|
| US 9523760 | B1 | 20-12-2016 | CA | 3016018 A1 | 19-10-2017 |
| | | | CN | 108780145 A | 09-11-2018 |
| | | | EP | 3417309 A1 | 26-12-2018 |
| | | | JP | 6690009 B2 | 28-04-2020 |
| | | | JP | 2019513985 A | 30-05-2019 |
| | | | KR | 20180108835 A | 04-10-2018 |
| | | | US | 9523760 B1 | 20-12-2016 |
| | | | WO | 2017177303 A1 | 19-10-2017 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. NAWAZ et al.** *A Compact, Bistatic Antenna System with Very High Interport Isolation for 2.4 GHz In-Band Full Duplex Applications*